# EUROPÄISCHE PATENTANMELDUNG

(11) **EP 1 283 415 A2**
(43) Veröffentlichungstag der Anmeldung: **12.02.2003**
(21) Anmeldenummer: 02014976.1
(22) Anmeldetag: 09.07.2002
(51) Int. Cl.: G01L 5/28

(54) **Verfahren und Vorrichtung zur Prüfung der Bremsen von Kraftfahrzeugen**

(30) Priorität: 06.08.2001 DE 10138549
(71) Anmelder: MAHA Maschinenbau Haldenwang GmbH & Co. KG, 87490 Haldenwang (DE)
(72) Erfinder: Knestel, Anton, 87496 Hopferbach (DE)
(74) Vertreter: Beetz & Partner Patentanwälte

(57) **Zusammenfassung**

Die Erfindung betrifft ein Verfahren zur Prüfung der Bremsen von Kraftfahrzeugen mit mehreren miteinander gekoppelten angetriebenen Achsen, bei dem die Räder 1 des Kraftfahrzeugs jeweils auf einem Rollenpaar 2 aufstehen und die Bremswirkungen der zu prüfenden Bremsen am Antrieb des jeweiligen Rollensatzes 2 erfaßt werden und bei dem alle angetriebenen Räder 1 jeweils auf einem Rollenpaar 2 aufstehen und in gleicher Drehrichtung angetrieben werden, wobei während des Bremsvorgangs die Winkelgeschwindigkeiten der Räder 1 gemessen und die Winkelgeschwindigkeiten der Räder 1 durch eine Regelung der jeweiligen Rollenantriebe 3 auf eine im wesentlichen gleiche Winkelgeschwindigkeit geregelt werden.

## Beschreibung

Die Erfindung betrifft ein Verfahren und eine Vorrichtung zur Prüfung der Bremsen von Kraftfahrzeugen mit mehreren miteinander gekoppelten angetriebenen Achsen, bei dem die Räder des Kraftfahrzeugs jeweils auf einem Rollenpaar aufstehen und die Bremswirkungen der zu prüfenden Bremsen am Antrieb des jeweiligen Rollensatzes erfaßt werden.

Die Prüfung der Funktionsfähigkeit von Kraftfahrzeugbremsen erfolgt bekanntermaßen dadurch, daß die Fahrzeugräder einer Achse jeweils auf einem Rollenpaar aufstehen, das von je einem Motor angetrieben wird. Die Räder des Kraftfahrzeugs werden auf eine vorgegebene Geschwindigkeit beschleunigt, bei der dann die Bremsenprüfung erfolgt. Hierzu wird das von der jeweiligen Radbremse erzeugte Drehmoment als Rückdrehmoment des entsprechenden Rollenantriebs erfaßt. Ein Problem ergibt sich jedoch, wenn das Kraftfahrzeug mehrere unlösbar miteinander gekoppelte angetriebene Achsen enthält. In diesem Fall werden bei der Prüfung einer einzelnen Bremse die Räder der am Prüfvorgang nicht beteiligten Fahrzeugachsen über die Kopplungen zwischen den angetriebenen Achsen mit abgebremst, da die erzeugten Drehmomente auf die anderen Räder übertragen werden. Durch die übertragenen Drehmomente können Scheinbremskräfte entstehen und die Meßwerte verfälscht werden.

Die DE 2 518 850 A1 zeigt ein Verfahren zur Prüfung der Bremsen von Kraftfahrzeugen mit mehreren untrennbar miteinander gekoppelten angetriebenen Achsen. Bei diesem Verfahren werden die Rollenpaare, auf denen die Räder einer Achse aufstehen, mit gleicher Geschwindigkeit und entgegengesetzter Drehrichtung angetrieben. Die anderen Räder des zu prüfenden Fahrzeugs stehen auf einem festen Untergrund auf. Wenn die Drehgeschwindigkeit der Fahrzeugräder entgegengesetzt gleich groß ist, wird durch ein in der Achse angebrachtes Differentialgetriebe des Fahrzeugs keine Kraft auf die zu den weiteren angetriebenen Fahrzeugachsen führende Gelenkwelle übertragen. Eine gleiche Umdrehungsgeschwindigkeit der Fahrzeugräder kann mit dem beschriebenen Verfahren jedoch nicht in ausreichendem Maße sichergestellt werden, da es beim Bremsvorgang zu einem Schlupf zwischen den Laufflächen der Räder und den Reibflächen der Rollensätze kommt, was zu einer Differenz der Drehgeschwindigkeit zwischen den Rädern der Achse und somit zu einer Drehbewegung der Kardanwelle führt.

Die DE 3 603 508 C2 zeigt ein weiteres Verfahren zum Prüfen von Bremsen an nicht abkoppelbaren Achsen eines Fahrzeugs. Hierbei werden die Umfangsgeschwindigkeiten der Fahrzeugräder einer der angetriebenen Achsen erfaßt und von einer Regeleinrichtung auf einen gleichen Wert geregelt, wobei ein Rad der Achse in Fahrtrichtung vorwärts und das andere Rad in Fahrtrichtung rückwärts angetrieben wird. Wenn die Durchmesser der angetriebenen Fahrzeugräder unterschiedlich sind liefert jedoch auch dieses beschriebene Verfahren keine genauen Aussagen über die tatsächlichen Drehgeschwindigkeiten bzw. Drehzahlen der von den Rollensätzen angetriebenen Fahrzeugräder. Dies kann insbesondere durch ungleiche oder ungleich abgefahrene Bereifung, unterschiedliches Reifenprofil und/ oder unterschiedlichen Luftdruck hervorgerufen werden.

In der EP 0 236 715 B1 ist ein Verfahren beschrieben, bei dem die Drehwinkelgeschwindigkeit der durch die Rollensätze in unterschiedliche Drehrichtung angetriebenen Fahrzeugräder einer Achse gemessen und auf einen gleichen Wert geregelt werden. Die Räder der anderen Achse stehen bei diesem Verfahren auf einem festen Untergrund auf. Jedoch besteht bei allen genannten Verfahren, bei denen jeweils ein Rad "vorwärts" und das andere Rad der Achse gleich schnell "rückwärts" gedreht wird, der Nachteil, daß eine hohe Differenzdrehzahl zwischen den beiden Rädern einer Achse auftritt. Insbesondere bei Fahrzeugen, deren Ausgleichsgetriebe mit einer Sperrkupplung versehen ist, können hohe Kräfte auftreten und eine genaue Prüfung der Bremsen verhindern. Da sich ein Rad der Achse bei den beschriebenen Verfahren "rückwärts" dreht, können die beiden Bremsen der Achse nicht gleichzeitig geprüft werden, was zu einer deutlichen Erhöhung der Prüfzeiten für die Fahrzeuge führt. Weiterhin können die Verfahren mit gegenläufiger Drehrichtung der Räder einer Achse nicht für Fahrzeuge mit starrem Allradantrieb verwendet werden. Auch Sperrdifferentialgetriebe und Viskokupplungen in der die angetriebenen Achsen verbindenden Gelenkwelle führen zu Problemen und ungenauen Meßwerten.

Der Erfindung liegt die Aufgabe zugrunde, ein Verfahren und eine Vorrichtung zur Prüfung der Bremsen von Kraftfahrzeugen mit mehreren miteinander gekoppelten angetriebenen Achsen aufzuzeigen, bei denen eine genaue Messung der Bremswirkung der einzelnen Radbremsen auch für Kraftfahrzeuge mit mehreren miteinander gekoppelten Achsen möglich ist.

Diese Aufgabe wird erfindungsgemäß durch die unabhängigen Ansprüche gelöst. Die abhängigen Ansprüche betreffen vorteilhafte Ausführungsformen der Erfindung.

Erfindungsgemäß sieht das Verfahren zur Prüfung der Bremsen von Kraftfahrzeugen mit mehreren miteinander gekoppelten angetriebenen Achsen vor, daß die Räder des Kraftfahrzeugs jeweils auf einem Rollenpaar aufstehen und die Bremswirkungen der zu prüfenden Bremsen am Antrieb des jeweiligen Rollensatzes erfaßt werden. Das Bremsmoment der jeweiligen Radbremse kann bei Betätigung als Rückmoment des jeweiligen Antriebs erfaßt werden. Anstelle der Rollenpaare können auch andere Anordnungen als Aufstandsfläche für die Fahrzeugräder, z.B. bewegliche Bänder, vorgesehen sein. Die Rollensätze werden einzeln von entsprechenden Antrieben, insbesondere elektrischen Gleich-, Wechselstrommotoren und Drehstrommotoren, angetrieben.

Alle angetriebenen Räder des Kraftfahrzeugs stehen gemäß der Erfindung jeweils auf einem Rollenpaar auf und werden in gleicher Drehrichtung angetrieben. Beispielsweise bei einem Vierradantrieb des Kraftfahrzeugs sind erfindungsgemäß vier angetriebene Rollenpaare zur Prüfung der Bremsen der vier Fahrzeugräder vorgesehen. Da die Drehbewegungen der Fahrzeugräder in gleicher Richtung erfolgen können keine Differenzdrehzahlen zwischen den Rädern einer Achse auftreten, die zu Störungen der Bremsprüfung und verfälschten Meßwerten führen können.

Nach dem erfindungsgemäßen Verfahren werden während des Bremsvorgangs die Winkelgeschwindigkeiten und/oder Umfangsgeschwindigkeiten der einzelnen Räder gemessen. Hierzu sind entsprechende Meßaufnehmer am Bremsenprüfstand vorgesehen. Gemäß der Erfindung erfolgt eine Regelung der jeweiligen Rollenantriebe auf eine im wesentlichen gleiche Geschwindigkeit aller Fahrzeugräder. Durch die gleichen Geschwindigkeiten der Fahrzeugräder erfolgt keine Drehmomentdurchleitung durch ein Differential und keine Drehbewegung der über das Differential mit der jeweiligen Achse antriebsmäßig verbundenen Gelenkwelle. Somit kann auch keine Drehmomentübertragung auf die mit dieser Gelenkwelle starr gekoppelten weiteren Achsen erfolgen. Die gemessenen Geschwindigkeiten der Räder können ständig entweder mit vorgegebenen Sollwerten oder miteinander verglichen und über die Regelung der jeweiligen Rollenantriebe gleich groß gehalten werden.

Erfindungsgemäß können die Winkelgeschwindigkeiten und/oder die Umfangsgeschwindigkeiten der Fahrzeugräder geregelt werden. Für Fahrzeuge, die ein Ausgleichsgetriebe, z.B. eine Viskokupplung, zwischen den angetriebenen Achsen aufweisen, ist die Regelung der Umfangsgeschwindigkeit ausreichend, da durch das Ausgleichsgetriebe geringe Drehzahldifferenzen zwischen den Achsen ausgeglichen werden können. Im Fall einer starren Verbindung zwischen den Achsen führt eine Regelung der Winkelgeschwindigkeiten zu einer verbesserten Entkopplung der Achsen und genaueren Meßergebnissen. Auf diese Weise wird eine im wesentlichen gleiche Winkelgeschwindigkeit der Fahrzeugräder gewährleistet, unabhängig von deren Raddurchmessern und dem Einfluß des Schlupfes zwischen den Laufflächen der Räder und den Reibflächen der Rollensätze. Durch die erfindungsgemäße Regelung der Winkelgeschwindigkeiten werden unterschiedliche Schlüpfe im Antrieb des Rollensatzes und/oder zwischen Rolle und Reifen, die durch unterschiedliche Bremskräfte und/oder unterschiedliche Reifen hervorgerufen werden, kompensiert. Da keine Kräfte bzw. Drehmomente zwischen den einzelnen Rädern übertragen werden, können die Bremswirkungen der zu prüfenden Bremsen störungsfrei ermittelt werden.

Eine besonders vorteilhafte Ausführungsform der Erfindung sieht vor, daß während des Bremsvorgangs die relativen Winkellagen der Räder erfaßt und durch die Regelung der jeweiligen Rollenantriebe auf eine im wesentlichen gleiche Winkellage der Räder relativ zueinander geregelt werden. Durch die Erfassung der relativen Winkellagen der Räder kann die genaue Winkelposition der einzelnen Räder bei jeder Umdrehung ermittelt werden. Die Erfassung der Winkellage bzw. Phasenlage der Räder ermöglicht eine besonders genaue Regelung der Rollenantriebe in Bezug auf eine gleichmäßige Bewegung der Räder untereinander und stellt den Gleichlauf der Räder sicher. Durch die Regelung wird eine im wesentlichen gleiche Winkellage der Räder relativ zueinander ermöglicht, d.h. ein Vor- oder Nacheilen einzelner Räder wird verhindert und eine phasensynchrone Drehbewegung ermöglicht. Aufgrund dieser phasengleichen Bewegung wird ein Verspannen der Ausgleichs- bzw. Differentialgetriebe verhindert und sichergestellt, daß keine Kräfte bzw. Drehmomente zwischen den einzelnen Rädern übertragen werden. Die phasensynchrone Regelung der Winkellagen kann zweckmäßigerweise zusammen mit der Regelung der Radumfangsgeschwindigkeiten und/oder der Winkelgeschwindigkeiten zur Verbesserung der Meßgenauigkeit des erfindungsgemäßen Verfahrens erfolgen.

Gemäß einer vorteilhaften Ausführungsform der Erfindung wird durch Beschleunigen und Verzögern eines Rades ein Achsenspiel ermittelt. Bei dem Achsenspiel kann es sich insbesondere um ein Zahnflankenspiel eines Getriebes und/oder eines Differentials, ein Kardanspiel und/oder ein Steckachsenspiel handeln. Meist wird das Achsenspiel hauptsächlich durch das Zahnflankenspiel des Ausgleichsgetriebes der Achse bestimmt. Die Regelung der Winkellage der Räder kann zweckmäßigerweise unter Berücksichtigung des ermittelten Achsenspieles erfolgen, so daß eine Kraft- bzw. Drehmomentübertragung zwischen den einzelnen Rädern weiter vermindert wird. Eine derartige Regelung der Winkellage kann ein Achsspiel von wenigen Grad berücksichtigen.

Es ist besonders vorteilhaft, wenn die Regelung der Winkellage unter Berücksichtigung der Winkelhalbierenden des Achsenspiels erfolgt. Auf diese Weise können die Winkellagen der sich drehenden Fahrzeugräder beim Bremsvorgang derart eingestellt werden, daß keine Kräfte zwischen den Rädern übertragen werden, beispielsweise, indem die Zahnflanken in einem Ausgleichsgetriebe nicht in Eingriff gelangen.

Das Achsenspiel kann beispielsweise durch eine Vorwärts- und Rückwärtsbewegung eines Rades ermittelt werden. Hierzu kann ein Rad einer Achse vor- und zurückgedreht werden während das andere Rad der Achse fest aufsteht oder durch geeignete Mittel gehalten wird. Durch Messung des möglichen Drehwinkels des bewegten Rades bis zu einem Anschlag bzw. einer Bewegung des zweiten Rades kann so das Achsenspiel ermittelt werden.

Gemäß einer vorteilhaften Ausgestaltung der Erfindung kann das Achsenspiel durch eine unterschiedliche Drehbewegung der Räder einer Achse ermittelt werden. Hierzu werden zunächst beide Räder der Achse in eine Drehbewegung versetzt. Durch Beschleunigen eines der Räder der Achse gerät das Verdrehspiel der Achse in eine der beiden Anschlagpositionen, beispielsweise gelangen die Zahnflanken eines Ausgleichsgetriebes auf einer Seite in Eingriff, und eine Kraft- bzw. Drehmomentübertragung erfolgt. Die relative Winkellage zwischen beschleunigtem Rad und "nachgeschlepptem" Rad kann durch Meßaufnehmer erfaßt werden. Durch eine anschließende Verzögerung des zuvor beschleunigten Rades gelangt das Spiel der Achse in die zweite Anschlagposition. Aufgrund der Messung der relativen Winkellage der rotierenden Räder zueinander in den beiden Anschlagpositionen kann das Achsspiel als Differenz der Winkellagen ermittelt werden.

Eine Berücksichtigung des Achsspiels bei der Regelung der Winkellage kann für jedes Rad einzeln erfolgen. Durch Unsymmetrien in den einzelnen Achsen und einem unterschiedlichen Aufbau der einzelnen Achsen können beispielsweise getrennte Sollwerte für die Winkellagen der einzelnen Räder vorgegeben werden. Es ist erfindungsgemäß jedoch auch möglich ein gemeinsames Achsspiel für die Fahrzeugräder einer Achse, beispielsweise durch Mittelung der gemessenen Achsspiele, zu ermitteln und einen gemeinsamen Sollwert vorzugeben. Auch kann die Regelung der Winkellagen unter Berücksichtigung eines gemeinsamen Wertes für die Spiele von mehreren Achsen erfolgen.

Um die Prüfzeiten für die Bremsen von Kraftfahrzeugen zu reduzieren, ist es besonders zweckmäßig die Bremswirkungen aller zu prüfenden Bremsen gleichzeitig zu ermitteln. Da bei dem erfindungsgemäßen Verfahren zur Bremsenprüfung alle Räder in die gleiche ("Vorwärts-")Richtung angetrieben werden und keine Kräfte bzw. Momente zwischen den einzelnen Rädern übertragen werden, ist dies durch das vorgeschlagene Verfahren ohne Störungen und mit hoher Genauigkeit möglich.

Es ist weiterhin vorteilhaft zur Messung der Winkelgeschwindigkeit und/oder der Winkellage an den Rädern umlaufende Markierungen anzubringen und deren Umlaufzeiten zu messen. Zur Messung können eine oder mehrere Markierungen pro Rad vorgesehen sein. Durch entsprechende Umrechnung der gemessenen Umlaufzeiten kann die Winkelgeschwindigkeit und/oder die Winkellage der Räder sehr genau ermittelt werden. Weiterhin stellt das Anbringen der Markierungen eine besonders einfache Maßnahme dar, bei der an dem zu prüfenden Kraftfahrzeug keine Um- oder Anbauten vorgenommen werden müssen. Selbstverständlich können die Winkelgeschwindigkeiten und/oder die Winkellagen auch auf andere Weise ermittelt werden, beispielsweise durch eine Wege- oder Lagemessung. Durch das Anbringen eines hochauflösenden Sensors an dem Rad kann eine genaue Erfassung der Winkelgeschwindigkeit und/oder der Winkellage erfolgen. Da für die Regelung der Radgeschwindigkeit eine Geschwindigkeitsmessung mit ausreichend hoher zeitlicher Auflösung nötig ist (vorteilhaft sind mindestens 100 Werte pro Sekunde), kann bei Verwendung eines Sensors mit ca. 500 Strichen pro Radumdrehung (Fahrzeugprüfgeschwindigkeit ca. 2 km/h) eine Regelung der Geschwindigkeit erfolgen. Mit einem derartigen Sensor könnte auch eine gleichzeitige Regelung der Winkelgeschwindigkeit und der Winkellage mit nur einem gemeinsamen Meßaufnehmer realisiert werden.

In einer zweckmäßigen Ausführungsform wird die Umfangsgeschwindigkeit der Räder gemessen. Dies kann insbesondere durch das Anbringen von Tastrollen am Radumfang erfolgen. Vorteilhafterweise kann die Regelung der Rollenantriebe unter Berücksichtigung der ermittelten Umfangsgeschwindigkeiten der Fahrzeugräder durchgeführt werden. Auf diese Weise kann beispielsweise das Fahrzeug auf eine vorgegebene Geschwindigkeit beschleunigt werden, bevor die Bremsenprüfung durchgeführt wird. Durch die Verwendung von Tastrollen können die Umfangsgeschwindigkeiten der Räder mit hoher zeitlicher Auflösung bzw. die zu simulierende Fahrzeuggeschwindigkeit erfaßt werden, ohne daß die genauen Raddurchmesser bekannt sein müssen. Bei dem erfindungsgemäßen Verfahren können die Rollenantriebe beispielsweise zuerst zum Erzielen einer bestimmten Fahrzeuggeschwindigkeit angesteuert werden. Nach Erreichen dieser Fahrzeuggeschwindigkeit kann dann die Bremsprüfung durchgeführt werden, wobei die Rollenantriebe zur Erzielung einer gleichen Geschwindigkeit und einer gleichen Winkellage geregelt werden.

Eine besonders vorteilhafte Ausführungsform sieht vor, eine gemeinsame Regelung der Radumfangsgeschwindigkeiten und der Winkellagen der Räder auszuführen. Die Radumfangsgeschwindigkeit kann beispielsweise durch Tastrollen mit der erforderlichen zeitlichen Auflösung für den Geschwindigkeitsregler erfaßt werden und die Winkellage läßt sich durch das Anbringen von Markierungen an den Rädern besonders einfach erfassen. Die gemeinsame Regelung kann insbesondere durch eine Kaskadenregelung realisiert werden.

Der erfindungsgemäße Bremsenprüfstand weist mehrere antreibbare Rollensätze auf, auf denen jeweils ein angetriebenes Rad des Kraftfahrzeugs aufsteht. Jeder Rollensatz weist weiterhin einen Antrieb und eine zugeordnete Meßeinrichtung für die von der zu prüfenden Bremse erzeugte Bremswirkung auf. Alle angetriebenen Räder des Kraftfahrzeugs stehen gemäß der Erfindung jeweils auf einem Rollenpaar auf und werden von den Rollenantrieben in gleicher Drehrichtung angetrieben. Den Rädern ist erfindungsgemäß eine Winkelgeschwindigkeits-Meßeinrichtung, die die Winkelgeschwindigkeit des jeweiligen Rades erfaßt, und/oder eine Radumfangsgeschwindigkeits-Meßeinrichtung zugeordnet. Die Winkelgeschwindigkeits-Meßeinrichtung kann beispielsweise als Wege- oder Lageaufnehmer, Inkremental- oder Absolutgeber ausgebildet sein. Die Umfangsgeschwindigkeiten der Räder können beispielsweise durch Tastrollen am Radumfang der Fahrzeugräder unabhängig von den Raddurchmessern erfaßt werden.

Der erfindungsgemäße Bremsenprüfstand weist weiterhin eine Regeleinrichtung auf, die aufgrund der erfaßten Winkelgeschwindigkeiten der Räder und/oder der Umfangsgeschwindigkeiten der Räder die jeweiligen Rollenantriebe derart regelt, daß die Geschwindigkeiten der Fahrzeugräder im wesentlichen gleich sind.

Die Regeleinrichtung kann durch verschiedene Regelcharakteristiken und Regelstrecken realisiert werden. Insbesondere der Leistungsteil zur Ansteuerung der Rollenantriebe kann mittels Leistungstransistoren, Thyristoren oder anderen elektronischen Leistungsschaltern realisiert werden. Der Regelalgorythmus für die Regelung der einzelnen Rollenantriebe kann auch auf einen Mikroprozessor in Form von entsprechender Steuerungssoftware implementiert werden.

Vorteilhafterweise ist den Fahrzeugrädern jeweils eine Winkellage-Meßeinrichtung zugeordnet. Die Regeleinrichtung kann die jeweiligen Rollenantriebe unter Berücksichtigung der erfaßten Winkellagen der Räder derart regeln, daß die relative Winkellage der Räder zueinander im wesentlichen gleich ist. Durch eine gemeinsame Regelung der Geschwindigkeiten und der Winkellagen können Verspannungen in Ausgleichsgetrieben in den Kraftfahrzeugachsen verhindert werden.

Zweckmäßigerweise sind Mittel zum Erfassen eines Achsenspiels vorgesehen. Die Mittel zum Erfassen des Achsenspiels können die Rollenantriebe zu einer Vorwärts- und Rückwärtsbewegung eines Rades ansteuern. Es ist erfindungsgemäß auch vorgesehen, die Rollenantriebe derart anzusteuern, daß eine unterschiedliche Drehbewegung der Räder einer Achse erfolgt, wobei jeweils ein Rad beschleunigt und verzögert wird. Durch ein Erfassen der relativen Winkellagen der rotierenden Fahrzeugräder zueinander können die Mittel zum Erfassen des Achselspiels das Verdrehspiel zwischen den Rädern ermitteln. Dieses entsteht hauptsächlich durch das Zahnflankenspiel in Ausgleichsgetrieben und/oder Differentialen. Weiterhin können ein Steckachsen-, Gelenkwellenspiel und/oder ein Kardanspiel zu dem Verdrehspiel beitragen.

Zur Erfassung von Umlaufzeiten von umlaufenden Markierungen an den Rädern ist es zweckmäßig entsprechende Meßaufnehmer vorzusehen. Optische oder induktive Meßaufnehmer sind besonders vorteilhaft, da sie berührungsfrei arbeiten. Die an den Rädern angebrachten Markierungen können beispielsweise als Relektoren, die einen Lichtimpuls Sensoren zuleiteten, oder als Magneten, die ein Magnetfeld für induktive Aufnehmer erzeugen, ausgebildet sein. Durch die Messung der Umlaufzeiten der Markierungen können die Winkellagen und/oder die Winkelgeschwindigkeiten der Räder genau erfaßt werden. Zur Erhöhung der Genauigkeit und der zeitlichen Auflösung können auch mehrere Markierungen pro Rad angebracht sein. Eine vorteilhafte Ausgestaltung sieht vor, die Markierungen an einer Kappe oder Scheibe anzubringen, die auf das Rad vor der Messung aufgesteckt wird. Dies kann beispielsweise durch einen Federmechanismus erfolgen, der in die Radfelge eingreift und die Kappe an der äußeren Seitenflanke des Rads zentrisch befestigt. Die Kappe kann ähnlich einer bekannten Radkappe ausgebildet sein und eine oder mehrere Markierungen an vorbestimmten Positionen entlang ihres äußeren Umfangsbereichs aufweisen.

Es ist ferner vorteilhaft, Tastrollen am Radumfang der Fahrzeugräder vorzusehen, um die Umfangsgeschwindigkeiten der Räder unabhängig von deren Durchmesser zu erfassen.

Gemäß der vorliegenden Erfindung ist es möglich, die Bremsen von Kraftfahrzeugen mit mehreren miteinander unlösbar gekoppelten angetriebenen Achsen störungsfrei und mit großer Genauigkeit zu prüfen. Da alle Räder des Kraftfahrzeugs in gleicher Richtung und mit gleicher Geschwindigkeit angetrieben werden, kann eine gleichzeitige Messung aller zu prüfenden Bremsen erfolgen. Durch die zusätzliche Regelung der Winkellage der Räder entsteht ein besonders hoher Gleichlauf und eine störende Übertragung von Kräften bzw. Drehmomenten durch Ausgleichsgetriebe kann verhindert werden. Die erfindungsgemäße Bremsenprüfung eignet sich weiterhin auch für Fahrzeuge mit starrem Allradantrieb und Sperrdifferential. Weiterhin ist es möglich die Bremsen von Kraftfahrzeugen mit starrer Kraftübertragung, d.h. ganz ohne Ausgleichsgetriebe, wie z.B. Baufahrzeuge oder Arbeitsmaschinen, zu prüfen, ohne daß Umbauten am Fahrzeug nötig sind, z.B. das Entfernen einer Antriebswelle.

Nachfolgend werden Ausführungsbeispiele der Erfindung unter Verwendung der Figuren näher erläutert. Es zeigen:
- Fig. 1: eine schematische Darstellung des erfindungsgemäßen Verfahrens für ein Rad des zu prüfenden Kraftfahrzeugs;
- Fig. 2: eine schematische Darstellung der Regelung von vier angetriebenen Rädern eines zu prüfenden Kraftfahrzeugs; und
- Fig. 3: eine schematische Darstellung zur Erläuterung des Verfahrens zur Erfassung eines Achsspiels.

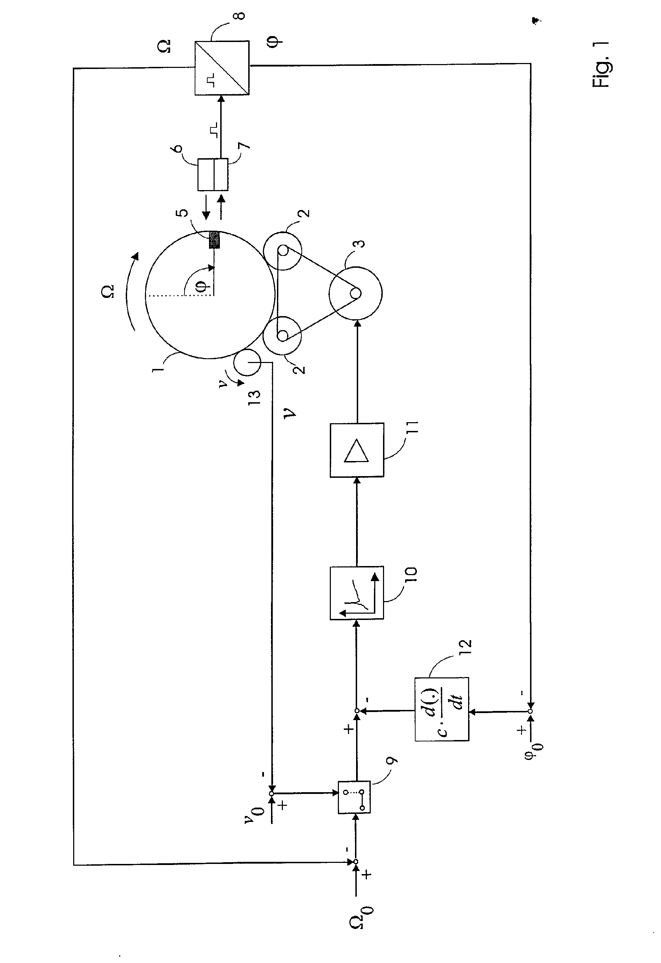

Die Fig. 1 zeigt eine schematische Darstellung des erfindungsgemäßen Verfahrens zur Prüfung der Bremsen von Kraftfahrzeugen mit mehreren miteinander gekoppelten angetriebenen Achsen. Zur Vereinfachung ist in Fig. 1 nur das Blockschaltbild zur Regelung eines Rollenantriebs dargestellt. Die Blockschaltbilder der anderen Räder sind entsprechend dem dargestellten Blockschaltbild.

Das in Fig. 1 gezeigte Fahrzeugrad 1 steht auf einem Rollenpaar 2 des Bremsenprüfstands auf und wird von diesem in Pfeilrichtung angetrieben. Es sei angemerkt, daß die anderen Räder des Kraftfahrzeugs (nicht gezeigt) ebenfalls jeweils auf einem Rollenpaar aufstehen und in gleicher Drehrichtung angetrieben werden.

Jedem Rollensatz 2 ist ein Antrieb 3 zugeordnet. In dem gezeigten Beispiel wird das Rollenpaar 2 über einen Riemen von dem Motor 3 angetrieben. Selbstverständlich sind auch andere Arten der Kopplung zwischen Rollensatz 2 und Antrieb 3 möglich. Der Antrieb 3 kann beispielsweise als elektrischer Gleichstrom- oder Drehstrommotor, insbesondere ein Asynchronmotor, ausgebildet sein.

Am Fahrzeugrad 1 ist eine umlaufende Markierung 5 angebracht. Die umlaufende Markierung 5 ist beispielsweise ein Reflektor, der das Licht einer Lichtquelle 6 reflektiert und einem optischen Sensor 7 zuleitet. Bei jedem Umlauf des Fahrzeugrades 1 entsteht somit ein Lichtimpuls, der vom optischen Sensor 7 erfaßt und an eine Auswerteeinrichtung 8 weitergeleitet wird.

In der Auswerteeinrichtung 8 wird anhand der gemessenen Umlaufzeit der Markierung 5 die Winkelgeschwindigkeit Ω und die Winkellage ϕ ermittelt. Die ermittelte Winkelgeschwindigkeit Ω kann in dem gezeigten Blockschaltbild zur Regelung des Antriebs 3 zurückgeführt und mit einem Sollwert Ω₀ verglichen werden. Dieser Sollwert Ω₀ kann für alle Räder des Fahrzeugs gleich vorgegeben werden oder er wird dynamisch während des Meßvorgangs bestimmt, beispielsweise wenn eine vorgegebene simulierte Fahrzeuggeschwindigkeit erreicht ist. Die Regeldifferenz wird über einen Schalter 9 dem Regler 10 zugeführt. Der Regler 10 weist eine geeignete Regelcharakteristik, beispielsweise ein PT, PD, PID oder PIDT₁-Verhalten, für den Regelkreis auf. Bei dem Entwurf des Reglers 10 ist insbesondere die Einschwingzeit für die Regelung, das asymptotische Verhalten und die Stabilität des Reglers zu berücksichtigen. Weiterhin ist auf eine ausreichende zeitliche Auflösung der Regelung zur Ansteuerung des Antriebs zu achten.

Zur Ansteuerung des elektrischen Antriebs 3 ist weiterhin ein Stellglied 11 vorgesehen. Das Stellglied 11 kann beispielsweise als Leistungstransistor, Thyristor oder eine andere elektronische Leistungsschaltung ausgebildet sein.

Durch die Regelung der Winkelgeschwindigkeiten Ω der Fahrzeugräder 1 des Kraftfahrzeugs kann eine gleiche Drehzahl der mit den Rädern verbundenen Antriebswellen, unabhängig von der Reifengröße und einem auftretenden Schlupf zwischen Rad 1 und Rollen 2, erzielt werden. Im Falle einer unterschiedlichen Bremswirkung der verschiedenen Räder und einem damit verbundenen unterschiedlichen Schlupf für die Räder, können trotzdem die Drehzahlen der Antriebsachsen gleichgehalten und eine Kraftübertragung über ein Differential, das beispielsweise zwischen den beiden Rädern einer Achse angeordnet ist, verhindert werden.

Die in Fig. 1 dargestellte kaskadierte Regelung kann weiterhin die relative Winkellage der Räder zueinander konstant halten. Hierzu wird die in der Auswerteeinrichtung 8 ermittelte Winkellage ϕ des Rades 1 mit einem Sollwert ϕ₀ verglichen. Diese Winkeldifferenz wird durch eine Verarbeitungsvorrichtung 12 in ein Signal zur Änderung der Geschwindigkeit der Räder umgerechnet. Dies kann beispielsweise durch das gezeigte Differenzierglied 12 erfolgen. Das derart erzeugte Signal zur Änderung der Winkelgeschwindigkeit kann wie in dem in Fig. 1 gezeigten Blockschaltbild in den Regelkreis eingebracht werden.

Durch die in Fig. 1 dargestellte kaskadierte Regelanordnung kann die mittlere Winkelgeschwindigkeit Ω der Fahrzeugräder gleichgehalten werden und gleichzeitig die relative Winkellage der Räder zueinander auf einen vorgegebenen Wert geregelt werden. Durch die damit erzielte phasensynchrone Drehbewegung der Räder kann ein Verspannen der Ausgleichsgetriebe und die damit verbundene Übertragung von Scheinbremskräften verhindert werden.

Die Fig. 1 zeigt weiterhin die Anordnung einer Tastrolle 13 am Umfang des Fahrzeugrads 1 zur Erfassung dessen Umfangsgeschwindigkeit v. Durch die Tastrolle 13 kann die Umfangsgeschwindigkeit v ohne Kenntnis des Raddurchmessers und mit einer hohen zeitlichen Auflösung ermittelt werden. Mit der gezeigten Anordnung ist es somit möglich die Räder des Kraftfahrzeugs auf eine bestimmte vorgesehene Umfangsgeschwindigkeit zu beschleunigen, die einer gewünschten zu simulierenden Fahrzeuggeschwindigkeit entspricht. Nach Erreichen dieser zu simulierenden Fahrzeuggeschwindigkeit kann die Bremsprüfung durchgeführt werden. Das gezeigte Blockschaltbild erlaubt eine gleichzeitige Regelung der Radumfangsgeschwindigkeiten zusammen mit der Winkellage der Räder, um eine hohe Genauigkeit bei der Messung der Bremswirkungen der einzelnen Bremsen zu erzielen, ohne daß durch die Verspannung in Ausgleichsgetrieben Scheinbremskräfte auftreten. Durch Umschalten des Schalters 9 kann der gezeigte Bremsenprüfstand von einer Umfangsgeschwindigkeitsregelung in eine Winkelgeschwindigkeitsregelung umgeschaltet werden.

Das dargestellte Blockschaltbild zeigt nur eine mögliche Realisierung des erfindungsgemäßen Verfahrens. Der Erfindungsgedanke kann selbstverständliche auch durch andere Anordnungen verwirklicht werden.

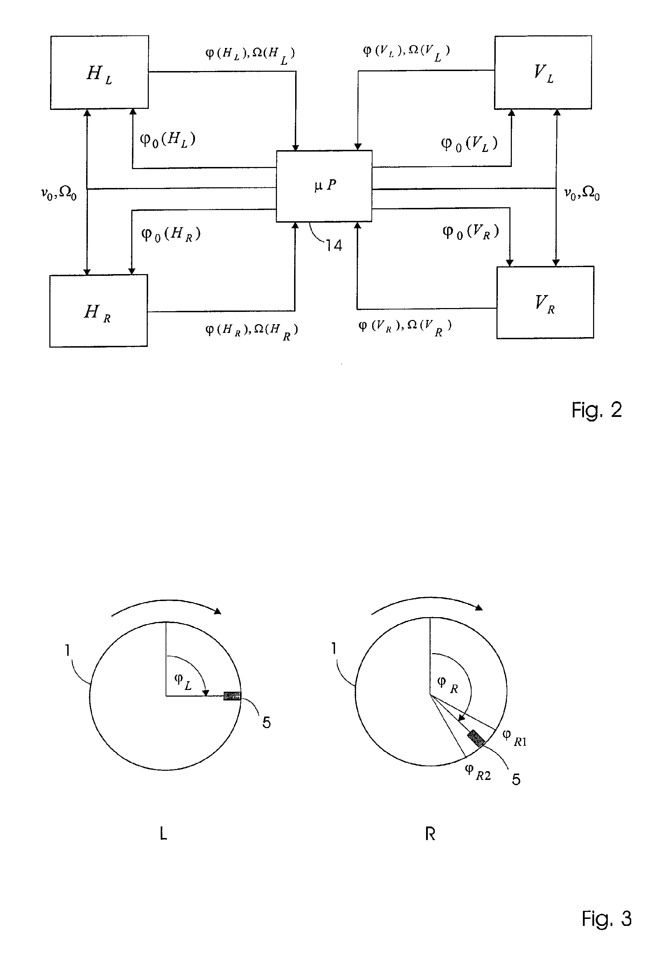

Die Fig. 2 zeigt schematisch ein Blockschaltbild zur Regelung von vier Rädern eines Fahrzeugs mit zwei miteinander gekoppelten angetriebenen Achsen. Ein Mikroprozessor 14 empfängt von jedem der vier Räder V_{L}, V_{R}, H_{L}, H_{R} die ermittelte Winkelgeschwindigkeit Ω(V_{L}), Ω(V_{R}), Ω(H_{L}), Ω(H_{R}) und die Winkellage ϕ(V_{L}), ϕ(V_{R}), ϕ(H_{L}) ϕ(H_{R}). Selbstverständlich können auch die Signale der Tastrollen 13 zur Ermittlung der Radumfangsgeschwindigkeiten v(V_{L}), v(V_{R}), v(H_{L}), v(H_{R}) ausgewertet werden. Ein Steuerprogramm des Mikroprozessors wertet die empfangenen Daten gemäß dem Verfahren der vorliegenden Erfindung aus und ermittelt für jedes Rad die entsprechenden Sollwerte V₀(V_{L}), V₀(V_{R}), V₀(H_{L}), V₀(H_{R}), Ω₀(V_{L}), Ω₀(V_{R}), Ω₀(H_{L}), Ω₀(H_{R}) und ϕ₀(V_{L}), ϕ₀(V_{R}), ϕ₀(H_{L}), ϕ₀(H_{R}) sowie ein Steuersignal ST für den Schalter 9 der Regelvorrichtung.

Beispielsweise werden den Regelvorrichtungen der einzelnen Räder die gleiche Winkelgeschwindigkeit Ω₀ und unterschiedliche Winkellagen ϕ₀(V_{L}), ϕ₀(V_{R}), ϕ₀(H_{L}), ϕ₀(H_{R}) vorgegeben. Unterschiedliche Winkellagen ϕ₀(V_{L}), ϕ₀(V_{R}), ϕ₀(H_{L}), ϕ₀(H_{R}) können zum Beispiel dadurch entstehen, daß zu Beginn der Messung die einzelnen Markierungen an den Rädern nicht an gleichen Positionen angebracht sind. So ist es möglich vor dem Beginn des Meßvorgangs eine Markierung oben an einem Rad und eine andere Markierung unten an einem anderen Rad anzubringen. Für einen phasengleichen Lauf der Räder und die Vermeidung von Verspannungen in Ausgleichsgetrieben ist die absolute Position der Markierungen jedoch nicht relevant. Zur Vermeidung von Scheinbremskräften ist nur wichtig, daß die relativen Winkellagen der Räder zueinander während des Bremsvorgangs konstant bleiben. Auch können ermittelte Achsspiele zur Berechnung der Winkellagen herangezogen werden.

Weiterhin kann erfindungsgemäß die Regelung der Winkellage der Fahrzeugräder unter Berücksichtigung der Winkelhalbierenden des Achsspiels erfolgen. In diesem Fall werden nach Ermittlung des Achsspiels die Winkellagen der Räder um die Winkelhalbierende derart korrigiert, daß die Zahnflanken der Ausgleichsgetriebe bzw. Differentiale nicht in Eingriff gelangen.

Die Fig. 3 zeigt schematisch eine Darstellung zur Verdeutlichung der Erfassung der Winkellage der Räder einer Achse. Es werden zwei Räder 1 eines Fahrzeugs, mit L und R gekennzeichnet, gezeigt. Das linke Rad L weist zu einem bestimmten Zeitpunkt eine Markierung 5 in einer durch den Winkel ϕ_{L} gekennzeichneten Winkellage auf. Zum gleichen Zeitpunkt befindet sich die Markierung 5 des rechten Rades R in einer mit ϕ_{R} gekennzeichneten Winkellage. Bei gleicher Winkelgeschwindigkeit der Räder befinden sich die Markierungen nach jeder Umlaufzeit wieder in derselben Position.

Wird nun das linke Rad beschleunigt, d.h. dessen Winkelgeschwindigkeit erhöht, wird aufgrund der unterschiedlichen Drehzahlen ein Drehmoment über das Differential zwischen den beiden Rädern L und R übertragen. Hauptsächlich aufgrund des Flankenspiels der Zahnräder des Differentials entsteht ein Verdrehspiel oder Achsenspiel zwischen den beiden Rädern. Zu dem Zeitpunkt, zu dem sich das linke Rad wieder in der durch ϕ_{L} gekennzeichneten Winkellage befindet, liegt bei den "nachgeschleppten" rechten Rad eine Winkellage ϕ_{R1} vor. Wird das linke Rad abgebremst, gelangen die gegenüberliegenden Zahnflanken des Differentials in Eingriff und das rechte Rad weist eine Winkellage ϕ_{R2} auf. Aufgrund der gemessenen Winkellagen ϕ_{R1} und ϕ_{R2} kann das Verdrehspiel der Achse ermittelt werden.

Das Achsspiel kann aber auch durch das Drehen eines Rads und das Messen des möglichen Winkels bis zu einem Anschlag, der durch das Festhalten des anderen Rads der Achse entsteht, bzw. bis zu dem Beginn einer Drehbewegung des anderen Rads ermittelt werden.

Durch Berücksichtigung der Winkelhalbierenden des Achsenspiels kann erfindungsgemäß für jedes Rad eine Winkellage ermittelt werden, bei der die Zahnräder in den Ausgleichsgetrieben nicht in Eingriff gelangen. Somit wird erreicht, daß keine Kraft bzw. kein Drehmoment zwischen den Rädern übertragen wird. Dies ermöglicht die störungsfreie Prüfung von Bremsen von Kraftfahrzeugen mit starr gekoppelten Achsen. Nach der Ermittlung der jeweiligen Verdrehspiele der Achsen können die Winkelhalbierenden des Achsenspiels mit den jeweiligen Offset-Werten der Winkellagen, die durch unterschiedliche Anordnung der Markierungen an den Rädern entstehen, zu einem jeweiligen Sollwert für die einzelnen Räder verrechnet werden.

Das erläuterte Erfindungsprinzip beschränkt sich nicht auf die dargestellten Ausführungsformen sondern beinhaltet selbstverständlich auch nicht gezeigte Kombinationen und Variationen der einzelnen Ausführungsformen.

## Patentansprüche

1. Verfahren zur Prüfung der Bremsen von Kraftfahrzeugen mit mehreren miteinander gekoppelten angetriebenen Achsen, bei dem die Räder (1) des Kraftfahrzeugs jeweils auf einem Rollenpaar (2) aufstehen und die Bremswirkungen der zu prüfenden Bremsen am Antrieb (3) des jeweiligen Rollensatzes (2) erfaßt werden,
**dadurch gekennzeichnet, daß**
alle angetriebenen Räder (1) jeweils auf einem Rollenpaar (2) aufstehen und in gleicher Drehrichtung angetrieben werden, während des Bremsvorgangs die Radumfangsggeschwindigkeiten und/oder die Winkelgeschwindigkeiten der Räder (1) gemessen und die Radumfangsggeschwindigkeiten und/oder die Winkelgeschwindigkeiten der Räder (1) durch eine Regelung der jeweiligen Rollenantriebe (3) auf eine im wesentlichen gleiche Geschwindigkeit geregelt werden.

2. Verfahren nach Anspruch 1, **dadurch gekennzeichnet, daß** während des Bremsvorgangs die relativen Winkellagen der Räder (1) erfaßt und durch die Regelung der jeweiligen Rollenantriebe (3) auf eine im wesentlichen gleiche Winkellage der Räder (1) relativ zueinander geregelt werden.

3. Verfahren nach Anspruch 2, **dadurch gekennzeichnet, daß** durch Beschleunigen und Verzögern eines Rades (1) ein Achsenspiel, insbesondere ein Zahnflankenspiel eines Getriebes und/oder eines Differentials, ein Kardanspiel und/oder ein Steckachsenspiel, ermittelt und die Regelung der Winkellagen unter Berücksichtigung des Achsenspiels geregelt wird.

4. Verfahren nach Anspruch 3, **dadurch gekennzeichnet, daß** die Regelung der Winkellagen unter Berücksichtigung der Winkelhalbierenden des Achsenspiels erfolgt.

5. Verfahren nach Anspruch 3 oder 4, **dadurch gekennzeichnet, daß** das Achsenspiel durch eine Vorwärts- und Rückwärtsbewegung eines Rades (1) ermittelt wird.

6. Verfahren nach Anspruch 3 oder 4, **dadurch gekennzeichnet, daß** das Achsenspiel durch eine unterschiedliche Drehbewegung der Räder (1) einer Achse ermittelt wird.

7. Verfahren nach einem der Ansprüche 1 bis 6, **dadurch gekennzeichnet, daß** die Bremswirkungen aller zu prüfenden Bremsen gleichzeitig ermittelt werden.

8. Verfahren nach einem der Ansprüche 1 bis 7, **dadurch gekennzeichnet, daß** zur Messung der Winkelgeschwindigkeit und/oder der Winkellage an den Rädern umlaufende Markierungen (5) angebracht werden, deren Umlaufzeiten gemessen werden.

9. Verfahren nach einem der Ansprüche 2 bis 8, **dadurch gekennzeichnet, daß** eine gemeinsame Regelung der Radumfangsgeschwindigkeiten und der Winkellagen der Räder (1) erfolgt, insbesondere durch eine Kaskadenregelung.

10. Bremsprüfstand zur Prüfung der Bremsen von Kraftfahrzeugen mit mehreren miteinander gekoppelten Achsen, mit mehreren antreibbaren Rollensätzen (2), auf denen jeweils ein angetriebenes Rad (1) des Kraftfahrzeugs aufsteht, jeweils einem Antrieb (3) für jeden Rollensatz (2) und einer Meßeinrichtung, die jeweils einem Rollenantrieb (2) zugeordnet ist, um eine Bremswirkung der zu prüfenden Bremse zu erfassen,
**dadurch gekennzeichnet, daß**
alle angetriebenen Räder (1) jeweils auf einem Rollenpaar (2) aufstehen,
die Rollenantriebe (3) alle Räder (1) in gleicher Drehrichtung antreiben,
den Rädern (1) jeweils eine Winkelgeschwindigkeits-Meßeinrichtung und/oder eine Radumfangsgeschwindigkeits-Meßeinrichtung zugeordnet ist und
eine Regeleinrichtung aufgrund der erfaßten Winkelgeschwindigkeiten der Räder (1) und/oder der erfaßten Radumfangsgeschwindigkeiten die jeweiligen Rollenantriebe (3) derart regelt, daß die Geschwindigkeiten im wesentlichen gleich sind.

11. Bremsprüfstand nach Anspruch 10, **dadurch gekennzeichnet, daß** den Rädern (1) jeweils eine Winkellage-Meßeinrichtung zugeordnet ist, die eine Winkellage des Rades (1) erfaßt, und die Regeleinrichtung unter Berücksichtigung der erfaßten Winkellagen der Räder (1) die jeweiligen Rollenantriebe (3) derart regelt, daß die relative Winkellage der Räder (1) zueinander im wesentlichen gleich ist.

12. Bremsprüfstand nach Anspruch 11, **dadurch gekennzeichnet, daß** Mittel zum Erfassen eines Achsenspiels, insbesondere eines Zahnflankenspiels eines Getriebes und/oder eines Differentials, eines Kardanspiels und/oder eines Steckachsenspiels, vorgesehen sind und die Regelung der Winkellagen unter Berücksichtigung des ermittelten Achsenspiels erfolgt.

13. Bremsprüfstand nach Anspruch 12, **dadurch gekennzeichnet**, die Regelung der Winkellagen unter Berücksichtigung der Winkelhalbierenden des Achsenspiels erfolgt.

14. Bremsprüfstand nach Anspruch 12 oder 13, **dadurch gekennzeichnet, daß** die Mittel zum Erfassen des Achsenspiels die Rollenantriebe (3) zu einer Vorwärts- und Rückwärtsbewegung eines Rades (1) ansteuern.

15. Bremsprüfstand nach Anspruch 12 oder 13, **dadurch gekennzeichnet, daß** die Mittel zum Erfassen des Achsenspiels die Rollenantriebe (3) derart ansteuern, daß eine unterschiedliche Drehbewegung der Räder (1) einer Achse erfolgt.

16. Bremsprüfstand nach einem der Ansprüche 10 bis 15, **dadurch gekennzeichnet, daß** die Meßeinrichtungen gleichzeitig die Bremswirkungen aller zu prüfenden Bremsen erfassen.

17. Bremsprüfstand nach einem der Ansprüche 10 bis 16, **dadurch gekennzeichnet, daß** Meßaufnehmer (7), insbesondere optische oder induktive, vorgesehen sind, die Umlaufzeiten von umlaufenden Markierungen (5) erfassen, die an den Rädern (1) angebracht sind.

18. Bremsprüfstand nach einem der Ansprüche 10 bis 17, **dadurch gekennzeichnet, daß** die Radumfangsgeschwindigkeits-Meßeinrichtung als Tastrolle (13) ausgebildet ist.

19. Bremsprüfstand nach einem der Ansprüche 11 bis 18, **dadurch gekennzeichnet, daß** die Regeleinrichtung als Kaskadenregelung ausgebildet ist, die eine gemeinsame Regelung der Radumfangsgeschwindigkeiten und der Winkellagen der Räder (1) durchführt.
